(19) Europäisches Patentamt
European Patent Office
Office européen des brevets

(11) **EP 2 532 073 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(21) Anmeldenummer: **10801170.1**

(22) Anmeldetag: **30.12.2010**

(51) Int Cl.:
*H02K 1/14* *(2006.01)*   *H02K 7/18* *(2006.01)*
*H02K 29/03* *(2006.01)*   *H02K 1/16* *(2006.01)*

(86) Internationale Anmeldenummer:
**PCT/EP2010/070911**

(87) Internationale Veröffentlichungsnummer:
**WO 2011/095264 (11.08.2011 Gazette 2011/32)**

(54) **STÄNDER EINER PERMANENTERREGTEN ROTIERENDEN ELEKTRISCHEN MASCHINE**

STATOR OF A PERMANENTLY EXCITED ROTATING ELECTRIC MACHINE

STATOR DE MACHINE ÉLECTRIQUE ROTATIVE À EXCITATION PERMANENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2010 DE 102010001620**

(43) Veröffentlichungstag der Anmeldung:
**12.12.2012 Patentblatt 2012/50**

(73) Patentinhaber: **Siemens Aktiengesellschaft 80333 München (DE)**

(72) Erfinder:
• **HARTMANN, Ulrich**
  **14197 Berlin (DE)**
• **MÖHLE, Axel**
  **12163 Berlin (DE)**

(56) Entgegenhaltungen:
EP-A2- 1 026 814    CN-Y- 201 298 796
US-A- 1 779 950    US-A- 4 700 098

**Beschreibung**

Die Erfindung betrifft einen Ständer einer permanenterregten rotierenden elektrischen Maschine.

Bei einer permanenterregten rotierenden elektrischen Maschine, wie z.B. einem permanenterregten Generator oder einem permanenterregten Elektromotor, sind insbesondere die Rastmomente im Stillstand der elektrischen Maschine eine kritische Designgröße. Die Amplitude der Rastmomente muss dabei möglichst minimal sein. Darüber hinaus sind auch die Pendelmomente, die unter Last auftreten, möglichst gering zu halten.

Insbesondere bei direkt angetriebenen, permanenterregten Windkraftgeneratoren sind die Rastmomente, die im Stillstand auftreten, sowie die Pendelmomente, die im Betrieb des Windkraftgenerators auftreten, möglichst gering zu halten.

Zur Minimierung der Pendelmomente werden heute im Wesentlichen folgende Verfahren angewendet:

- Schrägung der im Rotor der elektrischen Maschine angeordneten Permanentmagnete,
- Schrägung der elektrischen Leiter im Ständer der elektrischen Maschine,
- Versetzen der Permanentmagnete des Rotors aus der Polmitte.

Die oben genannten bekannten Verfahren sind jedoch fertigungstechnisch aufwändig.

Aus der US 1 779 950 A und der CN 201 298 796 Y ist eine elektrische Maschine mit einem Stator, bestehend aus in Umfangsrichtung angeordneten Statorsegmenten bekannt, wobei die Statorsegmente Zähne und Nuten aufweisen und wobei sich die jeweiligen Zähne der Segmentgrenze von benachbarten Statorsegmenten berühren.

Aus der US 4 700 098 A ist eine elektrische Maschine mit einem Stator bekannt, der Statorzähne und zwischen den Statorzähnen angeordnete Nuten aufweist, in denen Wicklungen eingebracht werden. Um Nutrasten zu vermeiden, sind die Statorzähne und damit die Magnetpole nicht äquidistant zu einander angeordnet.

Es ist Aufgabe der Erfindung, bei einer permanenterregten rotierenden elektrischen Maschine auftretende Rast- und/oder Pendelmomente zu verringern.

Diese Aufgabe wird gelöst durch einen Ständer gemäß Anspruch 1.

Vorteilhafte Ausbildungen der Erfindung ergeben sich aus den abhängigen Ansprüchen.

Dadurch, dass eine Minderzahl von den Zähnen, die nicht unmittelbar an einer Segmentgrenze angeordnet sind, eine einheitliche Breite aufweisen, die größer ist als die einheitliche Breite der Mehrzahl von den Zähnen, die nicht unmittelbar an einer Segmentgrenze angeordnet sind, können die Rastund/oder Pendelmomente weiter verringert werden.

Weiterhin erweist es sich als vorteilhaft, wenn die Minderzahl von den Zähnen, die nicht unmittelbar an einer Segmentgrenze angeordnet sind, eine einheitliche Breite aufweisen, die kleiner oder gleich ist als die doppelte einheitliche Breite der Mehrzahl von den Zähnen, die nicht unmittelbar an einer Segmentgrenze angeordnet sind. Wenn die Breite der Minderzahl von den Zähnen, die nicht unmittelbar an einer Segmentgrenze angeordnet sind, eine einheitliche Breite aufweist, die in dem angegebenen Bereich liegt, werden die Rastund/ oder Pendelmomente besonders stark verringert.

Weiterhin erweist es sich als vorteilhaft, wenn die Breiten der beiden an der jeweiligen Segmentgrenze sich berührenden Zähne gleich groß sind, da dann die Segmente an der Segmentgrenze mechanisch besonders stabil ausgeführt sind.

Die permanenterregte rotierende elektrische Maschine kann dabei z.B. als Generator oder Elektromotor ausgebildet sein, wobei der Generator insbesondere als Windkraftgenerator und insbesondere als direkt angetriebener (das Windrad ist direkt ohne zwischengeschaltetes Getriebe mit dem Windkraftgenerator verbunden) Windkraftgenerator ausgebildet sein kann.

Ein Ausführungsbeispiel der Erfindung ist in der Zeichnung dargestellt und wird im Folgenden näher erläutert. Dabei zeigen:

FIG 1      eine schematisierte Ansicht einer permanenterregten rotierenden elektrischen Maschine und

FIG 2      eine schematisierte Detailansicht eines Ausschnitts eines Ständers der Maschine.

FIG 3      eine schematisierte Detailansicht eines Ausschnitts eines erfindungsgemäßen Ständers der Maschine im Rahmen einer Ausführungsform der Erfindung.

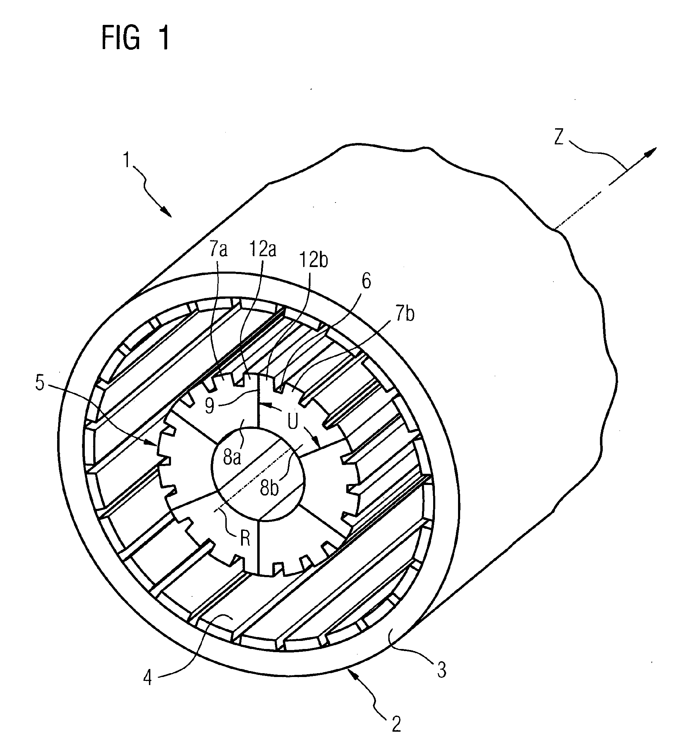

In FIG 1 ist in Form einer schematisierten perspektivischen Darstellung eine permanenterregte rotierende elektrische Maschine 1 dargestellt. Die Maschine 1 ist dabei als Generator und insbesondere als Windkraftgenerator ausgebildet. Es sei dabei an dieser Stelle angemerkt, dass der Übersichtlichkeit halber in FIG 1 nur die zum Verständnis der Erfindung wesentlichen Elemente der Maschine 1 dargestellt sind.

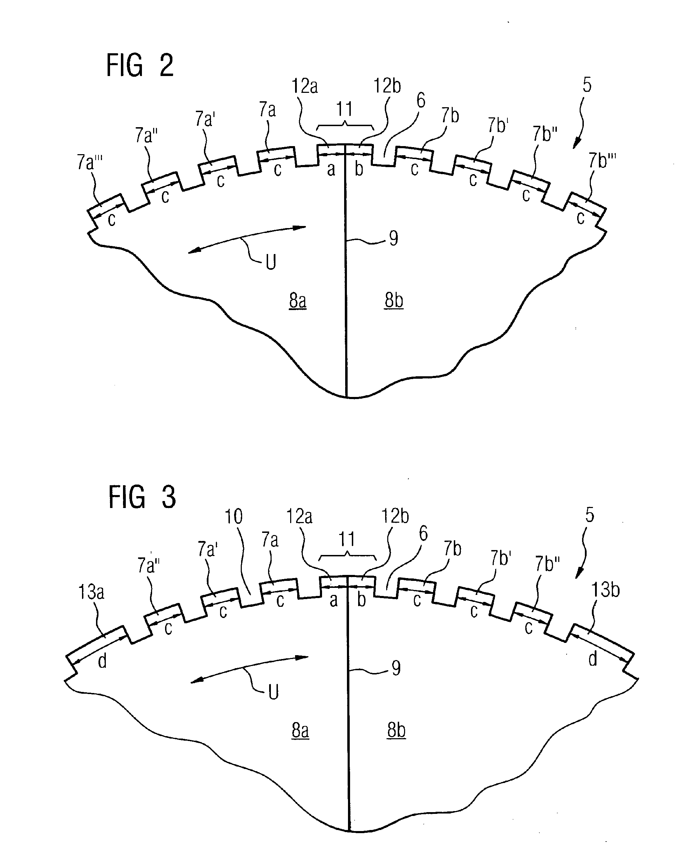

Die Maschine 1 weist einen Rotor 2 auf, der rotierbar um eine Rotationsachse R der Maschine 1 angeordnet ist. Der Rotor 2 umfasst dabei alle um die Rotorachse R rotierbar angeordneten Elemente der Maschine 1. Der Rotor 2 weist ein Rotorjoch 3 auf, an dem Permanentmagnete angeordnet sind, wobei der Übersichtlichkeit halber in FIG 1 nur ein Permanentmagnet 4 mit einem Bezugszeichen versehen ist. Im Betrieb der Maschine 1 rotiert der Rotor 2 im Rahmen des Ausführungsbeispiels gemäß Fig. 3 um einen in der Maschine 1 zentral angeordneten und gegenüber der Umgebung der Maschine 1 ruhend angeordneten Ständer 5. Da der Rotor 2 um den Ständer 5 herum angeordnet ist, wird eine solche Maschine fachspezifisch auch als Außenläufer bezeichnet. Da der Rotor 1 Permanentmagnete aufweist, welche permanent ein Magnetfeld zum Betrieb der Maschine 1 erzeugen, wird eine solche Maschine fachspezifisch auch als permanenterregte oder permanetmagneterregte Maschine bezeichnet. Da die Maschine 1 einen um eine Rotationsachse R im Betrieb der Maschine 1 rotierenden Rotor 2 aufweist, wird eine solche Maschine auch als rotierende elektrische Maschine bezeichnet.

Der erfindungsgemäße Ständer 5 weist mehrere in Umfangsrichtung U des Ständers 5 aneinander angeordnete Segmente auf. Im Rahmen des Ausführungsbeispiels gemäß Fig. 3 weist der Ständer 5 dabei sechs Segmente auf, wobei der Übersichtlichkeit halber nur die Segmente 8a und 8b mit einem Bezugszeichen versehen sind. Die Segmente weisen in axialer Richtung Z des Ständers 5 verlaufende Zähne und Nuten auf, wobei der Übersichtlichkeit halber in FIG 1 nur die Zähne 7a, 12a, 7b, 12b, und die Nut 6 mit einem Bezugszeichen versehen sind. Jeweils unmittelbar aneinander angrenzende Segmente berühren sich dabei an einer Segmentgrenze, wobei der Übersichtlichkeit halber nur die Segmentgrenze 9, an der sich die Segmente 8a und 8b berühren, mit einem Bezugszeichen versehen ist. Jedes Segment besteht aus hintereinander in axialer Richtung Z angeordneten Blechen. Die einzelnen Bleche eines Segments sind dabei in der Regel mit einer elektrischen Isolierschicht, wie z.B. einer Lackschicht, versehen. Bei der Montage des Ständers 5 werden die Segmente aneinander in Umfangsrichtung U angeordnet und miteinander verbunden, so dass sich der dargestellte rohrförmige Ständer 5 ergibt.

Die Zähne und Nuten der Segmente entstehen durch eine entsprechende Ausbildung der Form der Bleche. In den Nuten um die Zähne herum verlaufen die elektrischen Wicklungen des Ständers, wobei die Wicklungen der Übersichtlichkeit halber und da für das Verständnis der Erfindung unwesentlich, nicht dargestellt sind.

Bei handelsüblichen permanenterregten rotierenden elektrischen Maschinen sind dabei die Breiten der einzelnen Zähne des Ständers 5 gleich. Erfindungsgemäß werden durch eine gezielte Verbreiterung bestimmter Zähne gegenüber den restlichen Zähnen des Ständers beim Betrieb der Maschine 1 auftretende Rast- und Pendelmomente verringert.

Es sei an dieser Stelle noch einmal angemerkt, dass es sich bei der FIG 1 um eine schematisierte Darstellung handelt, bei der z.B. insbesondere die Breite, Anzahl und Abmessungen der Zähne, Nuten und Permanentmagnete, sowie die Größe des zwischen Ständer und Rotor angeordneten Luftspalts nicht mit der Realität übereinstimmen.

In FIG 2 ist in Form einer schematisierten Schnittansicht ein Ausschnitt der Segmente 8a und des unmittelbar an das Segment 8a angrenzenden Segments 8b dargestellt. Die beiden Segmente 8a und 8b berühren sich an der Segmentgrenze 9. In dem gezeigten Ausschnitt weist das Segment 8a die Zähne 12a, 7a, 7a', 7a'' und 7a''', und das Segment 8b die Zähne 12b, 7b, 7b', 7b'' und 7b''' auf. Es sei an dieser Stelle angemerkt, dass ein Segment in der Realität z.B. hunderte von Zähnen und Nuten aufweisen kann, so dass in FIG 2 nur ein kleiner Ausschnitt der Segmente dargestellt ist.

Die Zähne der unmittelbar aneinander angrenzenden Segmente sind derart angeordnet, dass an der jeweiligen Segmentgrenze jeweils ein Zahn des einen Segments einen Zahn des an das Segment unmittelbar angrenzenden Segments berührt. Die Zähne der unmittelbar aneinander angrenzenden Segmente 8a und 8b sind derart angeordnet, dass an der Segmentgrenze 9 jeweils ein Zahn des einen Segments 8a einen Zahn des an das Segment 8a unmittelbar angrenzenden Segments 8b berührt. Dies sind die Zähne 12a und 12b, die einander an der Segmentgrenze 9 berühren. Es erfolgt also somit erfindungsgemäß keine Teilung des Ständers innerhalb einer Nut.

In FIG 2 ist der Übersichtlichkeit halber nur eine Nut 6 mit einem Bezugszeichen versehen. Ein Segment endet, wie schon gesagt, nicht in Umfangsrichtung U an einer Nut, d.h. die Segmentgrenze 9 liegt nicht innerhalb einer Nut. Der Zahn 12a weist eine Breite a auf und der Zahn 12b eine Breite b. Die Zähne, die nicht unmittelbar an einer Segmentgrenze angeordnet sind, d.h. im Ausführungsbeispiel gemäß FIG 2 die dargestellten Zähne 7a, 7a', 7a'', 7a''', 7b, 7b', 7b'' und 7b''' weisen eine einheitliche Breite c auf, d.h. sie sind alle gleich breit. Die Summe (a+b) der Breiten a und b, der an der jeweiligen Segmentgrenze sich berührenden Zähne 12a, 12b ist größer als die einheitliche Breite c von allen Zähnen (7a, 7a', 7a'', 7a''', 7b, 7b', 7b'', 7b'''), die nicht unmittelbar an einer Segmentgrenze 9 angeordnet sind.

Das heißt es gilt:

$$a+b \; > \; c$$

Der aus den beiden an der Segmentgrenze 9 sich berührenden beiden Zähne 12a und 12b gebildete Gesamtzahn 11 weist somit eine größere Breite, insbesondere deutlich größere Breite auf, als die einheitliche Breite c der Zähne, die nicht unmittelbar an einer Segmentgrenze 9 angeordnet sind. Durch die Maßnahme werden die Rast- und Pendelmomente deutlich reduziert. Im Gegensatz zum Stand der Technik wird somit nicht ein beliebiger Zahn durch die Segmentgrenze geteilt, so dass die dabei entstehenden Teilzähne nicht wie beim Stand der Technik unter Vernachlässigung eines entstehenden eventuell zwischen den beiden Teilzähnen angeordneten minimalen Luftspalts genauso breit sind wie ein ungeteilter Zahn.

Eine hohe mechanische Stabilität der Segmente wird erreicht, wenn die Breiten a und b der beiden an der jeweiligen Segmentgrenze sich berührenden Zähne gleich groß sind, d.h. es gilt: a = b

In FIG 3 ist eine Ausführungsform der Erfindung dargestellt, wobei in FIG 3 gleiche Elemente mit den gleichen Bezugszeichen versehen sind wie in FIG 2. Von der Funktionsweise und dem Aufbau stimmt die Ausführungsform gemäß FIG 3 mit FIG 2 überein, wobei jedoch bei der Ausführungsform gemäß FIG 3 eine Minderzahl von Zähnen, welche nicht unmittelbar an der Segmentgrenze angeordnet sind, eine größere Breite aufweisen als die einheitliche Breite der Mehrzahl der Zähne, die nicht unmittelbar an einer Segmentgrenze angeordnet sind. Im Rahmen des Ausführungsbeispiels weisen hierbei die Zähne 13a und 13b eine Breite b auf, die größer ist als die einheitliche Breite c der Mehrzahl der Zähne 7a, 7a', 7a", 7b, 7b', 7b", die nicht unmittelbar an einer Segmentgrenze angeordnet sind. Das heißt, es gilt:

$$d > c$$

Die Summe (a+b) der Breiten a und b der beiden an der jeweiligen Segmentgrenze 9 sich berührenden Zähne ist dabei größer als die einheitliche Breite c der Mehrzahl 7a, 7a', 7a", 7b, 7b', 7b", die nicht unmittelbar an einer Segmentgrenze angeordnet sind.

Eine besonders gute Unterdrückung der Rast- und Pendelmomente wird erreicht, wenn die Minderzahl von Zähnen (13a, 13b), die nicht unmittelbar an einer Segmentgrenze angeordnet sind, eine einheitliche Breite d aufweisen, die kleiner oder gleich ist als die doppelte einheitliche Breite c der Mehrzahl der Zähne, die nicht unmittelbar an einer Segmentgrenze angeordnet sind, d.h. es gilt:

$$c < d \leq 2c$$

Selbstverständlich ist es auch bei dieser Ausbildung der Erfindung von Vorteil, wenn die Breiten der beiden an der jeweiligen Segmentgrenze sich berührenden Zähne gleich groß sind, d.h. es gilt:

$$a=b$$

Um eine besonders hohe Stabilität zu erreichen, kann vorzugsweise für die Breite der Zähne auch gelten:

$$a = b = c$$

d.h., die Breite der Zähne, die unmittelbar an einer Segmentgrenze angeordnet sind, stimmt mit der Breite der Mehrzahl der Zähne, die nicht unmittelbar an einer Segmentgrenze angeordnet sind, überein.

Das oben im Rahmen der Beschreibung zur FIG 2 und FIG 3 bezüglich der beiden Segmente 8a und 8b gemachten Aussagen gelten entsprechend auch für die übrigen in FIG 2 und FIG 3 nicht dargestellten Segmenten des Ständers 5.

Durch die Erfindung kann auf fertigungstechnisch aufwändige Maßnahmen wie Polversatz oder Nutschrägung verzichtet werden.

Die so gestalteten Segmente sind aufgrund der höheren Steifigkeit und aufgrund des an der Segmentgrenze angeordneten Zahns einfacher zu fertigen und zu montieren als bei einem handelsüblichen Ständer, bei dem alle Zähne einschließlich dem aus den beiden an der jeweiligen Segmentgrenze sich berührenden Zähne gebildeten Gesamtzahns, eine einheitliche Breite aufweisen (a+b = c = d).

**Patentansprüche**

1. Ständer einer permanenterregten rotierenden elektrischen Maschine (1), wobei der Ständer (5) mehrere in Umfangsrichtung (U) des Ständers (5) aneinander angeordnete Segmente (8a, 8b) aufweist, wobei die Segmente (8a, 8b) in axialer Richtung (Z) des Ständers (5) verlaufende Zähne (7a, 7a', 7a", 7a"', 7b, 7b', 7b", 7b"', 13a, 13b, 12a, 12b) und Nuten (6) aufweisen, wobei jeweils unmittelbar aneinander angrenzende Segmente (8a,8b) sich an einer Segmentgrenze (9) berühren, wobei die Zähne (7a, 7a' , 7a", 7a"' , 7b, 7b', 7b", 7b"') der unmittelbar aneinander angrenzenden Segmente (8a, 8b) derart angeordnet sind, dass an der Segmentgrenze (9) jeweils ein Zahn (12a) des einen Segments (8a) einen Zahn (12b) des an das eine Segment (8a) unmittelbar angrenzenden Segments (8b) berührt,

   **dadurch gekennzeichnet, dass** die Summe der Breiten (a,b) der beiden an der jeweiligen Segmentgrenze (9) sich berührenden Zähne (12a,12b) größer ist als die einheitliche Breite (c) der Mehrzahl der Zähne (7a, 7a', 7a'', 7b, 7b', 7b''), die nicht unmittelbar an einer Segmentgrenze (9) angeordnet sind oder von allen Zähnen (7a, 7a', 7a", 7a"', 7b, 7b', 7b", 7b"'), die nicht unmittelbar an einer Segmentgrenze (9) angeordnet sind, wobei eine Minderzahl der Zähne (13a, 13b), die nicht unmittelbar an einer Segmentgrenze (9) angeordnet sind, eine einheitliche Breite (d) aufweisen, die größer ist als die einheitliche Breite (c) der Mehrzahl der Zähne (7a,7a', 7a'',7b, 7b',7b''), die nicht unmittelbar an einer Segmentgrenze (9) angeordnet sind.

2. Ständer nach Anspruch 1,
   **dadurch gekennzeichnet, dass** die Minderzahl der Zähne (13a, 13b), die nicht unmittelbar an einer Segmentgrenze (9) angeordnet sind, eine einheitliche Breite (d) aufweisen, die kleiner oder gleich ist als die doppelte einheitliche Breite (c) der Mehrzahl der Zähne (7a, 7a', 7a", 7b, 7b', 7b"), die nicht unmittelbar an einer Segmentgrenze (9) angeordnet sind.

3. Ständer nach einem der vorhergehenden Ansprüche,
**dadurch gekennzeichnet, dass** die Breiten (a,b) der beiden an der jeweiligen Segmentgrenze (9) sich berührenden Zähne (12a,12b) gleich groß sind.

4. Permanenterregte rotierende elektrische Maschine (1), wobei die Maschine (1) als Generator oder Elektromotor ausgebildet ist und einen Ständer (5) nach einem der vorhergehenden Ansprüche aufweist.

5. Permanenterregte rotierende elektrische Maschine (1) nach Anspruch 4, **dadurch gekennzeichnet, dass** der Generator als Windkraftgenerator ausgebildet ist.


**Claims**

1. Stator of a permanently excited rotating electric machine (1), wherein the stator (5) comprises several segments (8a, 8b) disposed adjacent to one another in the peripheral direction (U) of the stator (5), wherein the segments (8a, 8b) comprise teeth (7a, 7a', 7a", 7a''', 7b, 7b', 7b", 7b''', 13a, 13b, 12a,12b) extending in the axial direction (Z) of the stator (5) and grooves (6), wherein segments (8a, 8b) immediately adjacent to one another in each instance touch at a segment boundary (9), wherein the teeth (7a, 7a', 7a", 7a''', 7b, 7b', 7b", 7b''', 13a, 13b, 12a, 12b) of the segments (8a, 8b) disposed immediately adjacent to one another such that a tooth (12a) of the one segment (8a) touches a tooth (12b) of the segment (8b) immediately adjacent to the one segment (8a) in each instance at the segment boundary (9), **characterised in that** the sum of the widths (a, b) of the two teeth (12a, 12b) touching at the respective segment boundary (9) is greater than the uniform width (c) of the plurality of teeth (7a, 7a', 7a", 7b, 7b', 7b''), which are not arranged immediately at a segment boundary (9) or of all teeth (7a, 7a', 7a", 7a''', 7b, 7b', 7b", 7b''') which are not disposed immediately at a segment boundary (9), wherein a minimum number of teeth (13a, 13b) which is not disposed immediately at a segment boundary (9) has a uniform width (d) which is greater than the uniform width (c) of the plurality of teeth (7a, 7a', 7a", 7b, 7b', 7b'') which are not disposed immediately at a segment boundary (9).

2. Stator according to claim 1,
**characterised in that**
the minimum number of teeth (13a, 13b), which is not disposed immediately at a segment boundary (9), has a uniform width (d) which is smaller than or equal to twice the uniform width (c) of the plurality of teeth (7a, 7a', 7a", 7b, 7b', 7b") which are not arranged immediately at a segment boundary (9).

3. Stator according to one of the preceding claims, **characterised in that**
the widths (a, b) of the two teeth (12a, 12b) touching one another at the respective segment boundary (9) are of equal size.

4. Permanently excited rotating electric machine (1), wherein the machine (1) is embodied as a generator or electric motor and comprises a stator (5) according to one of the preceding claims.

5. Permanently excited rotating electric machine (1) according to claim 4, **characterised in that** the generator is embodied as a wind power generator.


**Revendications**

1. Stator d'une machine ( 1 ) électrique tournante à excitation permanente, le stator ( 5 ) ayant plusieurs segments ( 8a, 8b ) disposés les uns à côté des autres dans la direction ( U ) périphérique du stator ( 5 ), les segments ( 8a, 8b ) ayant des dents ( 7a, 7a', 7a", 7a''', 7b, 7b', 7b", 7b''', 13a, 13b, 12a, 12b ) et des encoches ( 6 ) s'étendant dans les directions ( Z ) axiales du stator ( 5 ), les segments ( 8a, 8b ), voisins l'un de l'autre directement respectivement, se touchant à une limite ( 9 ) de segment, les dents ( 7a, 7a', 7a", 7a''', 7b, 7b', 7b", 7b''', 13a, 13b, 12a, 12b ) des segments ( 8a, 8b ) voisins l'un de l'autre directement étant disposées de manière à ce qu'à la limite ( 9 ) de segment, respectivement une dent ( 12a ) de l'un des segments ( 8a ) touche une dent ( 12b ) du segment ( 8b ) voisin directement du segment ( 8a ), **caractérisé en ce que** la somme des largeurs ( a, b ) des deux dents ( 12a, 12b ), se touchant à la limite ( 9 ) de segment respective, est plus grande que la largeur ( c ) unitaire de la pluralité des dents ( 7a, 7a', 7a", 7b, 7b', 7b" ), qui ne sont pas disposées directement à une limite ( 9 ) de segment ou de toutes les dents ( 7a, 7a', 7a", 7a''', 7b, 7b', 7b", 7b''') qui ne sont pas disposées directement à une limite ( 9 ) de segment, une minorité des dents ( 13a, 13b ), qui ne sont pas disposées directement à une limite ( 9 ) de segment, ayant une largeur ( d ) unitaire qui est plus grande que la largeur ( c ) unitaire de la pluralité des dents ( 7a, 7a', 7a", 7b, 7b', 7b" ) qui ne sont pas disposées directement à une limite ( 9 ) de segment.

2. Stator suivant la revendication 1,
**caractérisé en ce que** la minorité des dents ( 13a, 13b ), qui ne sont pas disposées directement à une limite ( 9 ) de segment, a une largeur ( d ) unitaire qui est inférieure ou égale au double de la largeur ( c ) unitaire de la majorité des dents ( 7a, 7a', 7a", 7b, 7b', 7b" ), qui ne sont pas disposées directement à une limite ( 9 ) de segment.

3. Stator suivant l'une des revendications précédentes, **caractérisé en ce que** les largeurs ( a, b ) des deux dents ( 12a, 12b ), se touchant à la limite ( 9 ) de segment respective, sont les mêmes.

4. Machine ( 1 ) électrique tournante à excitation permanente,
   la machine ( 1 ) étant constituée en génératrice ou en moteur électrique et ayant un stator ( 5 ) suivant l'une des revendications précédentes.

5. Machine ( 1 ) électrique tournante à excitation permanente suivant la revendication 4,
   **caractérisée en ce que** la génératrice est constituée en génératrice d'éolienne.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1779950 A
- CN 201298796 Y

- US 4700098 A